# EUROPÄISCHE PATENTSCHRIFT

(11) **EP 0 590 345 B1**
(45) Veröffentlichungstag und Bekanntmachung des Hinweises auf die Patenterteilung: **10.01.1996**
(21) Anmeldenummer: 93114106.3
(22) Anmeldetag: 02.09.1993
(51) Int. Cl.: H01S 3/03

(54) **Bandleiterlaser mit durch Massefedern optimierter HF-Spannungsverteilung**
Slab laser having optimised RF voltage distribution by means of grounded springs
Laser à ruban optimalisé en répartition de tension HF par ressorts de masse

(30) Priorität: 30.09.1992 DE 4232838
(43) Veröffentlichungstag der Anmeldung: 06.04.1994
(73) Patentinhaber: CARL ZEISS JENA GmbH, D-07745 Jena (DE)
(72) Erfinder: Günther, Wolfgang, Dipl.-Ing., D-81735 (DE)
(74) Vertreter: Muhsfeldt, Willi

(56) Entgegenhaltungen:
- EP-A- 0 477 864
- US-A- 4 719 640
- LASER UND OPTOELEKTRONIK Bd. 23, Nr. 3, M rz 1991, STUTTGART DE Seiten 68 - 81 R.NOWACK ET AL. 'DIFFUSIONSGEKüHLTE CO2-HOCHLEISTUNGSLASER IN KOMPAKTBAUWEISE'

## Beschreibung

Die Erfindung betrifft einen hochfrequenzangeregten diffusionsgekühlten Bandleiterlaser mit einer Masse- und einer darüber angeordneten HF-Metallelektrode, die mit Mitteln zur gegenseitigen Fixierung versehen sind, jeweils Kühlkanäle aufweisen und zwischen denen ein Entladungsspalt gebildet ist, mit an den Elektroden angebrachten, gleichmäßig über deren Länge verteilten Parallelinduktivitäten, mit einem instabilen Resonator, und mit einem den Resonator und die Elektroden umschließenden, aus einer ersten und zweiten Stirnplatte und einer damit verbundenen zylindrischen Außenwand zusammengesetzten elektrisch leitenden vakuumdichten Gehäuse.

Ein derartiger Bandleiterlaser ist, abgesehen von den Parallelinduktivitäten aus der EP-A-0 477 865 bekannt. Parallelinduktivitäten sind, allerdings nur für einen Wellenleiterlaser, aus der US-PS-4,352,188 bekannt.

Bis vor einigen Jahren standen der Konstruktion eines CO₂-Hochleistungslasers in Kompaktbauweise unüberwindliche Schwierigkeiten entgegen. Bedingt durch die physikalischen Prozesse bei der Laseranregung ist der Wirkungsgrad sehr stark von einer nicht zu hohen Gastemperatur, in der Praxis also von einer effektiven Entfernung überschüssiger Wärme aus dem Lasergas abhängig. Bei diffusionsgekühlten CO₂-Lasern, bei denen die Wärme durch einen stationären Wärmeleitungsprozeß von der heißesten Stelle im Zentrum des Laserplasmas zu den gekühlten Wänden des Entladungsgefäßes transportiert wird, hat sich herausgestellt, daß die Laserausgangsleistung nur von der Länge und nicht vom Durchmesser der Entladung abhängt. In der Folge wurden deshalb einerseits aufwendige Faltungskonzepte entwickelt, um trotz Leistungen bis den kW-Bereich hinein kompakte Abmessungen des Lasers beizubehalten, andererseits wurden schnell geströmte, also konvektionsgekühlte Laser entwickelt. Schnell geströmte Laser der Leistungsklasse 500 bis über 10.000 W sind derzeit kommerziell erhältlich. Diese nicht für einen abgeschlossenen ("sealed-off")Betrieb vorgesehenen Laser sind jedoch voluminös, haben ein hohes leistungsspezifisches Gewicht und sind auf eine kostenungünstige externe Gasversorgung und auf Pumpen für schnelle Gasumwälzung angewiesen.

Aus den genannten Gründen waren bisher nur sogenannte Wellenleiterlaser mit Leistungen bis zu 200 W als kompakte diffusionsgekühlte CO₂-Laser erhältlich. Inzwischen sind jedoch beispielsweise aus der EP-A-0 305 893 die Grundlagen eines Bandleiterlasers bekannt, dessen Entladungsraum im Gegensatz zum Wellenleiterlaser keinen quadratischen Querschnitt aufweist, sondern der auf flächenhaften, zur Seite hin offenen Wellenleiterstrukturen basiert. Die Kombination eines derartigen, quasi eindimensionalen Wellenleiters mit einem instabilen Resonator in orthogonaler Richtung ermöglicht dabei eine beugungsbegrenzte Grundmode-Laserstrahlung. Bei diesem Bandleiterkonzept wird die Wärme großflächig von den eng benachbarten Elektroden aufgenommen, von wo sie dann mit Hilfe geeigneter Kühlflüssigkeiten abgeführt wird. Es ist deshalb nicht mehr notwendig, das Lasergas selbst mit einem besonderen Kühlkreislauf durch den Entladungsraum zu pumpen.

Zum Stand der Bandleiterlasertechnik wird auf den Artikel von R. Nowack et al, "Diffusionsgekühlte CO₂-Hochleistungslaser in Kompaktbauweise" in "Laser und Optoelektronik", 23 (3)/ 1991 hingewiesen. Bisher standen der Umsetzung des obenbeschriebenen Bandleiterlaserkonzepts in eine praxistaugliche Konstruktion noch erhebliche Schwierigkeiten entgegen. Als besonders problematisch stellte sich die Auswahl eines geeigneten Elektrodenmaterials heraus. Die Elektroden dienen einerseits zur Einkoppelung der Hochfrequenzenergie, werden also mit hohen Strömen belastet. Außerdem sollen sie einen möglichst verlustfreien optischen Wellenleiter bilden und die Wärme gut ableiten. Darüberhinaus sind nur Bauteile und Materialien geeignet, durch die ein langzeitstabiler Gleichgewichtszustand des Gasgemisches im Laser gewährleistet wird. Im genannten Artikel wird beispielsweise die zu erwartende, unerwünscht hohe CO₂-Zersetzung aufgrund von Kupferelektroden erörtert. Weitere Forderungen an den Aufbau gekühlter und mit Mitteln zur gegenseitigen Distanzierung versehener Elektroden sind die Optimierung des Gewichts, ausreichende Stabilität gegenüber mechanischen bzw. thermischen Belastungen und nicht zuletzt die kostengünstige Herstellbarkeit.

Zur Lösung dieser und anderer Probleme wurde in der Stand der Technik nach Artikel 54(3) EPÜ bildenden europäischen Anmeldung EP-A-0 585 482 vorgeschlagen, daß jede Elektrode als Verbund aus einem Trägerteil mit mechanisch stabilem Profil und einem damit hart verlötetem oder verschweißten, dem Entladungsspalt zugewandten plattenförmigen Elektrodenteil mit integrierter Kühlung ausgebildet ist. Vorzugsweise soll dabei das Trägerteil einen annähernd rechteckförmigen Querschnitt aufweisen. Bei dieser Konstruktion ist jedoch das Problem der HF-Spannungsverteilung zwischen den beiden übereinander angeordneten Elektroden und der sie umgebenden zylindrischen Außenwand, die gleichzeitig als HF-Abschirmung und als Außenleiter dient, noch nicht völlig zufriedenstellend gelöst. Trotz Parallelinduktivitäten tauchen diese Probleme auf, da, anders als beim Wellenleiterlaser, Masseelektrode und Außenwand aus thermischen Gründen nicht identisch sind.

Die Aufgabe der Erfindung besteht in der Schaffung eines Lasers der eingangs genannten Art, mit dem ohne großen konstruktiven Aufwand eine verbesserte HF-Spannungsverteilung erzielt werden kann.

Diese Aufgabe wird erfindungsgemäß dadurch gelöst, daß bei einem Bandleiterlaser der eingangs genannten Art die Masseelektrode an mindestens einer Stelle entlang ihrer axialen Ausdehnung mittels elektrisch leitender Verbindungselemente mit der Außenwand verbunden ist.

Weiterbildungen der Erfindung sind Gegenstand von Unteransprüchen. Im folgenden wird die Erfindung anhand eines Ausführungsbeispiels und den Figuren der Zeichnung noch näher erläutert. Es zeigen
- FIG 1: schematisch und im Schnitt eine erfindungsgemäße Ausführungsform einer Massefeder bei einem Verbundelektroden-Paar
- FIG 2: eine geschnittene Seitenansicht der Ausführungsform gemäß FIG 1.

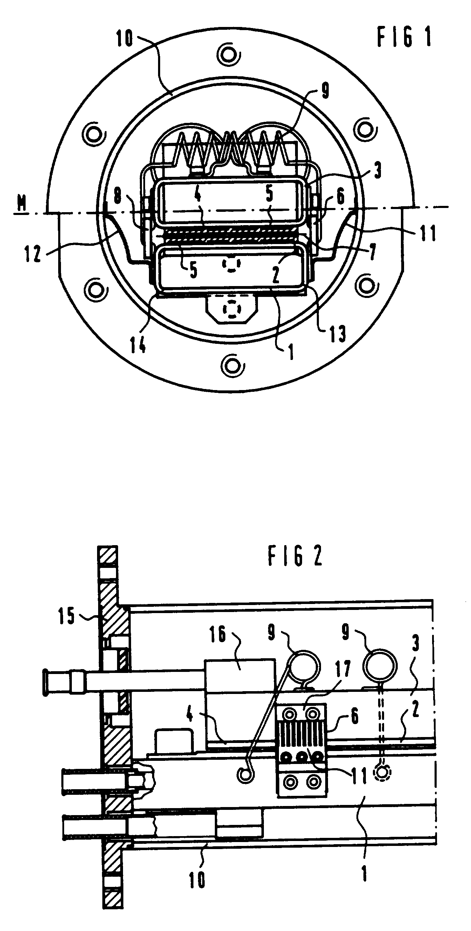

In FIG 1 ist eine Masseelektrode, bestehend aus einem rechteckförmigen Trägerteil 1 und zugehörigem plattenförmigen Elektrodenteil 2 dargestellt. Darüber befindet sich die HF-Elektrode 3, 4, die ebenfalls als Verbundelektrode ausgeführt ist und in die ebenso wie in die Masseelektrode Kühlkanäle 5 integriert sind. Die beiden Verbundelektroden 1, 2 und 3, 4 sind einerseits durch einen Entladungsspalt 7 getrennt, andererseits werden sie mittels Abstandshaltern 6 und 8 gegenseitig fixiert und gehalten. Ferner dargestellt ist eine oberhalb der HF-Elektrode 3, 4 angeordnete Induktivität 9, die, zusammen mit weiteren Spulen, der Homogenisierung der Laserentladung längs der Elektrodenteile 2, 4 dient. Das Laserinnere ist durch eine zylindrische Außenwand 10 und durch nicht dargestellte Stirnplatten vakuumdicht nach außen hin abgeschlossen. Das zur Entladung verwendete Gasgemisch wird weder erneuert, noch zur Kühlung verwendet.

Die vakuumdichte Außenwand 10 ist als elektrisch leitendes Mantelrohr aus V2A-Stahl ausgeführt und dient gleichzeitig als HF-Abschirmung und als Außenleiter. In FIG 1 sind Metallfedern 11 und 12 dargestellt, die jeweils an einer Seite der Masseelektrode 1, 2 befestigt und jeweils leitend mit dem Inneren der Außenwand 10 verbunden sind. Vorzugsweise sind die Metallfedern 11 und 12 so angeordnet, daß sie etwa in Höhe der Mittellinie M an diametral etwa gegenüberliegenden Stellen der Außenwand 10 enden. Die Verbindungselemente verhindern, daß sich zwischen Masseelektrode 1, 2 und Außenwand 10 HF-Potentialunterschiede ausbilden. Als besonders kritisch haben sich dabei die der Außenwand 10 relativ benachbarten Kanten 13 und 14 der Masseelektrode 1, 2 herausgestellt. Insbesondere dort, aber auch insgesamt in der unteren Hälfte des Laserrohres soll ein Spannungsabfall der Masseelektrode 1, 2 zur Außenwand 10 hin vermieden werden, da ein solcher letztlich den Wirkungsgrad der Entladung zwischen den Elektrodenteilen 2 und 4 beeinträchtigen würde. Erfindungsgemäß ist es besonders günstig, außer dem in FIG 1 dargestelltem Massefedern-Paar 11 und 12 in etwa gleichmäßigen Abständen voneinander entlang der Masseelektrode 1, 2 noch eine Reihe weiterer Metallfeder-Paare 11 und 12 vorzusehen. Durch die erfindungsgemäßen Maßnahmen wird eine trotz Induktivitäten 9 sonst nicht in gleicher Weise eindeutig definierte HF-Spannungsverteilung zwischen der HF-Elektrode 3, 4 einerseits und der Massenelektrode 1, 2 plus der Außenwand 10 andererseits gewährleistet.

In FIG 2 ist in einer Seitenansicht ein Teil eines Lasers mit Verbundelektroden und Masse federn dargestellt. Die Basiselektrode 1, 2 ist fest mit einer Stirnplatte 15 verbunden. Die HF-Elektrode 3, 4 ist über ihr angeordnet und durch aus Metallplättchen 17 und isolierenden Distanzstücken bestehenden Abstandshalter 6 fixiert und gehalten. Die Kühlung eines ersten Resonatorspiegels 16 und der Verbundelektroden wird durch die Zuführung von Kühlwasser gewährleistet. Innerhalb der vakuumdichten Außenwand 10 befinden sich auch, entlang der HF-Elektrode 3, 4 mehrere Induktivitäten 9. Die in FIG 2 dargestellte Metallfeder 11 kann vorteilhafterweise mehrfingrig ausgebildet und an Metallplättchen 17 befestigt sein, die ihrerseits elektrisch leitend mit den Seiten des Trägerteils 1 der Masseelektrode 1, 2 leitend verbunden sind. An diesen Plättchen 17 sind auch die isolierenden Distanzstücke 6 befestigt.

Für die rechteckförmigen Profile 1 und 3 kann vorteilhafterweise V2A-Stahl verwendet werden, wobei nur die eigentlichen Elektrodenteile 2 und 4 wegen der notwendigen HF-und Wärmeleitfähigkeit aus Kupfer bestehen müssen. An das nicht oberflächenbehandelte Elektrodenprofil 1, 3 aus V2A-Stahl können die Metallplättchen 17 der Abstandshalter 6, 8 und die Induktivitäten 9 für eine homogene Spannungsverteilung vorteilhafterweise direkt angeschweißt werden. Zur Verbesserung der HF-Leitfähigkeit ist es weiterhin vorteilhaft, die Induktivitäten 9 außerhalb der Schweißstellen zu verkupfern.

## Patentansprüche

1. Hochfrequenzangeregter diffusionsgekühlter CO₂-Bandleiterlaser mit einer Masse- und einer darüber angeordneten HF-Metallelektrode (1, 2; 3, 4), die mit Mitteln (6, 8) zur gegenseitigen Fixierung versehen sind, jeweils Kühlkanäle aufweisen und zwischen denen ein Entladungsspalt (7) gebildet ist, mit an den Elektroden angebrachten, gleichmäßig über deren Länge verteilten Parallelinduktivitäten (9), mit einem instabilen Resonator, und mit einem den Resonator und die Elektroden umschließenden, aus einer ersten und zweiten Stirnplatte (15) und einer damit verbundenen zylindrischen Außenwand (10) zusammengesetzten elektrisch leitenden vakuumdichten Gehäuse,
wobei die Masseelektrode (1, 2) an mindestens einer Stelle entlang ihrer axialen Ausdehnung mittels elektrisch leitender Verbindungselemente (11, 12) mit der Außenwand (10) verbunden ist.

2. Bandleiterlaser nach Anspruch 1, bei dem die Verbindungselemente (11, 12) in etwa gleichmäßigem Abstand voneinander an möglichst vielen Verbindungsstellen entlang der Masseelektrode (1,2) an dieser und an entsprechenden Stellen der Außenwand (10) angebracht sind.

3. Bandleiterlaser nach Anspruch 1 oder 2, bei dem die Verbindungselemente als insbesondere mehrfingrige Metallfedern (11, 12) ausgebildet sind, und bei dem an der Masseelektrode (1, 2) an jeder Verbindungsstelle jeweils links und rechts eine Metallfeder (11, 12) befestigt und etwa in Höhe der Mittellinie der zylindrischen Außenwand (10) mit dieser an diametral gegenüberliegenden Stellen verbunden ist.

4. Bandleiterlaser nach Anspruch 2 oder 3, bei dem die Verbindungselemente an Abstandshaltern (6, 8) angebracht sind, die die Elektroden (1, 2, 3, 4) gegenseitig fixieren.

## Claims

1. Radio-frequency-excited, diffusion-cooled CO₂ stripline laser having an earth electrode and an RF metal electrode (1, 2; 3, 4) arranged above it, which electrodes are provided with means (6, 8) for mutual fixing, in each case having cooling channels and between which a discharge gap (7) is formed, having parallel inductances (9) which are fitted to the electrodes and are distributed uniformly over their length, having an unstable resonator and having an electrically conductive, vacuumtight housing which encloses the resonator and the electrodes and is composed of a first and a second end plate (15) and of a cylindrical outer wall (10) which is connected thereto, the earth electrode (1, 2) being connected to the outer wall (10) at at least one point along its axial extent by means of electrically conductive connecting elements (11, 12).

2. Stripline laser according to Claim 1, in the case of which the connecting elements (11, 12) are fitted to the earth electrode (1, 2) at an approximately uniform separation from one another and at as many connecting points as possible along said earth electrode (1, 2), and are fitted to corresponding points on the outer wall (10).

3. stripline laser according to Claim 1 or 2, in the case of which the connecting elements are designed as preferably multi-finger metal springs (11, 12), and in the case of which a metal spring (11, 12) is attached to the earth electrode (1, 2) in each case on the left and on the right at each connecting point, and is connected to the cylindrical outer wall (10) at diametrically opposite points, approximately at the level of the centre line of said cylindrical outer wall (10).

4. Stripline laser according to Claim 2 or 3, in the case of which the connecting elements are fitted to spacer holders (6, 8) which mutually fix the electrodes (1, 2, 3, 4).

## Revendications

1. Laser à ruban à CO₂ excité en haute fréquence et refroidi par diffusion, comportant une électrode métallique de masse (1,2) et une électrode métallique HF (3,4) disposée sur l'électrode précédente, ces électrodes étant pourvues de moyens de fixation mutuelles (6,8) et comportant chacune des canaux de refroidissement tout en définissant entre elles une fente de décharge (7), et comportant des inductances parallèles (9), qui sont montées sur les électrodes et sont réparties uniformément sur leur longueur, un résonateur instable, et un boîtier électriquement conducteur et étanche au vide, qui entoure le résonateur et les électrodes et est constitué par la réunion de première et seconde plaques frontales (15) et d'une paroi extérieure cylindrique (10) reliée à ces plaques,
l'électrode de masse (1,2) étant reliée à la paroi extérieure (10), en au moins un emplacement le long de son étendue axiale, au moyen d'éléments de liaison électriquement conducteurs (11,12).

2. Laser à ruban suivant la revendication 1, dans lequel les éléments de liaison (11,12) sont montés approximativement à la même distance les uns des autres sur l'électrode de masse (1,2), en un nombre aussi grand que possible d'emplacements de liaison, le long de l'électrode de masse et en des emplacements correspondants de la paroi extérieure (10).

3. Laser à ruban suivant la revendication 1 ou 2, dans lequel les éléments de liaison sont réalisés sous la forme de ressorts métalliques (11,12), notamment à plusieurs branches, et dans lequel un ressort métallique (11,12) est fixé à l'électrode de masse (1,2) à gauche et à droite de chaque emplacement de liaison, et est relié, approximativement à hauteur de la ligne médiane de la paroi extérieure cylindrique (10), à cette paroi en des emplacements diamétralement opposés.

4. Laser à ruban suivant la revendication 2 ou 3, dans lequel les éléments de liaison sont montés sur des entretoises (6,8), qui fixent mutuellement les électrodes (1,2,3,4).
